# EUROPEAN PATENT APPLICATION

(11) **EP 3 916 646 A1**
(43) Date of publication of application: **01.12.2021**
(21) Application number: 20177522.8
(22) Date of filing: 29.05.2020
(51) Int. Cl.: G06N 20/00

(54) **ADAPTIVE MACHINE LEARNING SYSTEM FOR AN EDGE DEVICE**

(71) Applicant: Atos Information Technology GmbH, 81739 München (DE)
(72) Inventor: Thronicke, Wolfgang, 33154 Salzkotten (DE)
(74) Representative: IPAZ

(57) **Abstract**

An adaptive machine learning system (1) for an edge device comprises at least one sensor (2), at least one input compensation module (3) and an evaluation module (4). The sensor (2) is designed to capture input data. The input compensation module (3) is designed to modify the input data such that edge device specific artifacts of the input data are compensated. The evaluation module (4) is trained to process the modified input data and to generate output data as a result.

## Description

The present invention relates to an adaptive machine learning system, a controlling system comprising the adaptive machine learning system, an edge device comprising the adaptive machine learning system and an adaptive machine learning based method.

For machine learning, device restrictions are a limiting factor. Often, it is not even possible to train a machine learning based system on an edge device. However, the execution of a machine learning model can be possible on edge devices.

Separating machine learning and deployment of the learned model on an edge device is a known technique to create a machine learning application in resource limited edge devices. Thus, the training is decoupled, whereby large datasets can be used for the training. The trained model is then deployed on an edge device and executed on input data collected by a sensor of the edge device (e.g. a camera).

Every physical device operates with its own tolerances due to small variations of components and production processes. During operation, two edge devices in the same environment will provide slightly different input data. During operation and with time, deviations also can change due to external conditions and/or aging processes.

Therefore, a generic machine learning model is never exactly tuned to an individual edge device. Thus, an edge device can provide input data comprising differences compared to training data the model has been trained with. Consequently, a performance of the trained machine learning model may be lower than expected or desired.

An objective of the present invention is to provide an adaptive machine learning system, a controlling system comprising the adaptive machine learning system, an edge device comprising the adaptive machine learning system and an adaptive machine learning based method. This objective is solved by an adaptive machine learning system, a controlling system comprising the adaptive machine learning system, an edge device comprising the adaptive machine learning system and an adaptive machine learning based method with the features of the independent claims, respectively. Advantageous embodiments are specified in the dependent claims.

An adaptive machine learning system for an edge device comprises at least one sensor, at least one input compensation module and an evaluation module. The sensor is designed to capture input data. The input compensation module is designed to modify the input data such that edge device specific artifacts of the input data are compensated. The evaluation module is trained to process the modified input data and to generate output data as a result.

The general idea is to have at least two modules, the input compensation module that is designed to compensate variations of edge devices and a main machine learning module which is the evaluation module. Advantageously, it is not necessary to retrain the evaluation module for each edge device. The input compensation module may also be a machine learning module which can be trained for the compensation of edge device specific artifacts.

In an embodiment the input compensation module is designed to modify the input data such that artifacts of the input data occurring due to aging of the edge device are compensated. Advantageously, it is not necessary to retrain the evaluation module for every aging phase of the edge device.

In an embodiment the input compensation module is designed to modify the input data such that artifacts of the input data occurring due variations of environmental parameters are compensated. Advantageously, it is not necessary to retrain the evaluation module if external conditions change.

In an embodiment the input compensation module is designed to modify the input data such that artifacts of the input data occurring due to limited resources of the edge device are compensated.

In order to operate an edge device with an intelligent service based on artificial intelligence, edge device restrictions concerning processing power, memory and bandwidth have to be considered. Advantageously, the resource compensation module is designed to compensate edge device specific artifacts occurring due to such device restrictions.

In an embodiment the input compensation module is designed to modify the input data such that sensor specific artifacts of the input data are compensated. Advantageously, this allows for e.g. the compensation of systematic errors occurring during capturing input data.

A controlling system comprises the adaptive machine learning system according to one of the embodiments described above, at least one output compensation module and at least one actuator. The output compensation module is designed to modify the output data such that actuator specific requirements are fulfilled. The actuator is designed to be controllable according to the modified output data.

Advantageously, the output compensation model is designed modify control signals for the actuator. Thus, deviations caused by production tolerances during the production of actuators can be compensated which allows for a reliable operation of an actuator.

An edge device comprises the adaptive machine learning system according to one of the embodiments described above. Generally, the trained evaluation module may also be executed on a server. However, the transfer of input data to the server creates a certain data-stream. Combining several sensors could result in a required bandwidth which can be difficult to guarantee for an intended use-case. Advantageously, no transfer of input data is required if the adaptive machine learning system is part of the edge device.

An adaptive machine learning based method comprises the following steps: Input data is captured with a sensor of an edge device. The input data are modified such that edge device specific artifacts of the input data are compensated. The modified input data are processed and output data are generated as a result, wherein processing the modified input data and generating the output data is performed by a trained evaluation module.

In an embodiment the method comprises the following further steps: The output data are modified according to actuator specific requirements. An actuator is controlled according to the modified output data.

In the following, the invention is described in connection with schematic figures, wherein
Fig. 1 shows an adaptive machine learning system for an edge device;
Fig. 2 shows a controlling system comprising the adaptive machine learning system; and
Fig. 3 shows a machine learning based method.

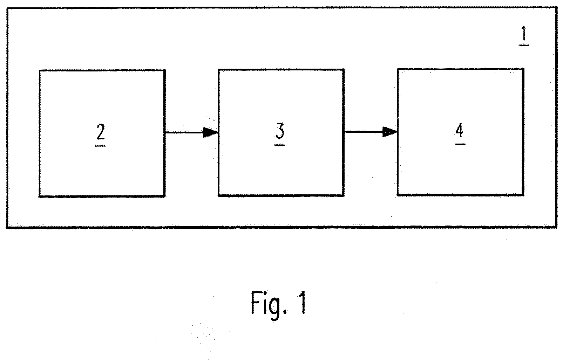

Fig. 1 schematically shows an adaptive machine learning system 1 for an edge device. The adaptive machine learning system 1 comprises at least one sensor 2, at least one input compensation module 3 and an evaluation module 4.

The sensor 2 is designed to capture input data. E.g. the sensor 2 can be a camera designed to capture images and/or videos. Alternatively, the sensor 2 may be any sensor, e.g. a temperature-sensor, an acceleration sensor or the like. The sensor 2 is part of the edge device which is not shown in Fig. 1. The edge device can be any portable device designed to process captured input.

The input compensation module 3 is designed to modify the input data captured by the sensor 2 such that edge device specific artifacts of the input data are compensated. The input compensation module 3 can be based on artificial intelligence/ machine learning. E.g. the input compensation module 3 can be a neuronal network, which is trained to perform the compensation of edge device specific artifacts of the input data.

Such artifacts may e.g. occur due to production tolerances in the production of edge devices and their sensors and small variations of other components of the edge devices. E.g., different cameras may capture slightly different pictures. In this case, the input compensation module 3 can compensate artifacts of pictures which are specific for one type of camera. If the sensor is e.g. a temperature-sensor, the input compensation module 3 can be designed to compensate for a temperature-offset of the temperature-sensor.

The evaluation module 4 is trained to process the modified input data and to generate output data as a result. The evaluation module 4 is based on artificial intelligence/ machine learning and can e.g. be a neuronal network. The evaluation module 4 can e.g. be designed for performing a recognition task. In this case, the output data can indicate a positive recognition performance of the evaluation module 4.

Advantageously, it is not necessary to retrain the evaluation module 4 for each distortion and/or each type of an edge device.

Instead of only one input compensation module 3, the system 1 may also comprise a set of input compensation modules 3 covering different variations of artifacts, e.g. variations of different edge devices. Such variations or distortions can be generated and used for a training of the set of input compensation modules 3. In the following different types if input compensation modules 3 are presented.

A first input compensation module 3 can be designed as an age compensation module designed to modify the input data such that artifacts of the input data occurring due to aging of the edge device are compensated. Thus, the evaluation module 4 does not need to be trained for different aging phases of the edge device.

A second input compensation module 3 can be designed as an external condition compensation module designed to modify the input data such that artifacts of the input data occurring due variations of environmental parameters are compensated, whereby a retraining of the evaluation module 4 can be omitted, if external conditions change in an environment of the edge device.

A third input compensation modules 3 can be designed as a resource compensation module designed to modify the input data such that artifacts of the input data occurring due to limited resources of the edge device are compensated. Thus, limited resources of the edge device like processing power, memory and bandwidth of a connection of the edge device can be considered.

A fourth input compensation module 3 can be designed to modify the input data such that sensor specific artifacts, e.g. systematic errors of sensors, of the input data are compensated.

A plurality of input compensation modules 3 can be tested sequentially. Thus, the input compensation module 3 allowing for a best performance of evaluation module 4 can be found und deployed. This is analogous to an ophthalmologist applying test lenses until vision is sufficiently restored. However, the first, second, third and fourth input compensation modules 3 may be deployed separately or as a part of just one input compensation module 3.

The system 1 as a whole can also be part of the edge device. Although, the trained evaluation module 4 may be executed on an external server, the transfer of the input data to the server creates a certain data-stream. Combining several sensors could result in a required bandwidth which can be difficult to guarantee for an intended use-case. Advantageously, no transfer of input data is required if the adaptive machine learning system 1 is part of the edge device.

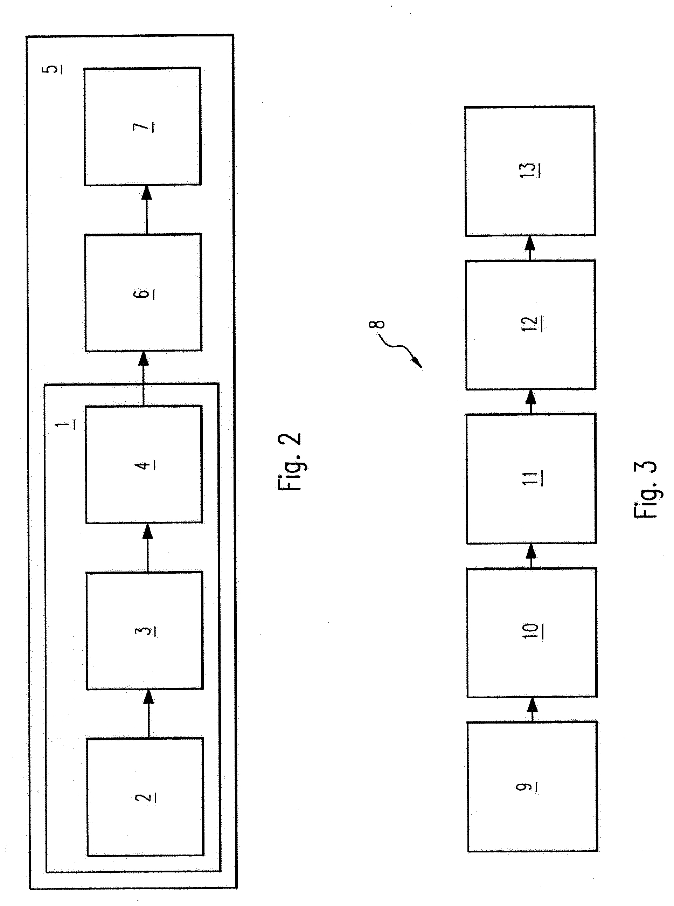

Fig. 2 schematically shows a controlling system 5 comprising the adaptive machine learning system 1 of Fig. 1. The controlling system 5 can e.g. be a production facility or an automation system.

The controlling system 5 comprises at least one output compensation module 6 and at least one actuator 7. The actuator 7 can be any element responsible for moving or controlling objects and/or parameters (e.g. a motor, a heating controller or the like). The output compensation module 6 can be based on artificial intelligence/ machine learning. E.g. the output compensation module 6 can be a neuronal network.

The output compensation module 6 is designed to modify the output data generated by the evaluation module 4 such that actuator specific requirements are fulfilled. The actuator 7 is designed to be controllable according to the modified output data. Advantageously, the output compensation model 6 is designed modify control signals for the actuator 7. Thus, deviations caused by production tolerances during the production of actuators 7 can be compensated which allows for a reliable operation of an actuator 7.

Fig. 3 schematically shows an adaptive machine learning based method 8.

In a first method step 9 input data are captured with a sensor 2 of an edge device. In a second method step 10 the input data are modified such that edge device specific artifacts of the input data are compensated. In a third method step 11 the modified input data are processed and output data are generated as a result, wherein processing the modified input data and generating the output data is performed by a trained evaluation module 4. In an optional fourth method step 12 the output data are modified according to actuator specific requirements. In an optional fifth method step 13 an actuator 7 is controlled according to the modified output data. The third and the fourth step 12, 13 may also be omitted.

### LIST OF REFERENCE NUMERALS

- 1: adaptive machine learning system
- 2: sensor
- 3: input compensation module
- 4: evaluation module
- 5: controlling system
- 6: output compensation module
- 7: actuator
- 8: adaptive machine learning system
- 9: first method step
- 10: second method step
- 11: third method step
- 12: fourth method step
- 13: fifth method step

## Claims

1. Adaptive machine learning system (1) for an edge device, comprising at least one sensor (2), at least one input compensation module (3) and an evaluation module (4),
wherein the sensor (2) is designed to capture input data,
wherein the input compensation module (3) is designed to modify the input data such that edge device specific artifacts of the input data are compensated,
wherein the evaluation module (4) is trained to process the modified input data and to generate output data as a result.

2. The system (1) as claimed in claim 1,
wherein the input compensation module (3) is designed to modify the input data such that artifacts of the input data occurring due to aging of the edge device are compensated.

3. The system (1) as claimed in one of the preceding claims,
wherein the input compensation module (3) is designed to modify the input data such that artifacts of the input data occurring due variations of environmental parameters are compensated.

4. The system (1) as claimed in one of the preceding claims,
wherein the input compensation module (3) is designed to modify the input data such that artifacts of the input data occurring due to limited resources of the edge device are compensated.

5. The system (1) as claimed in one of the preceding claims,
wherein the input compensation module (3) is designed to modify the input data such that sensor specific artifacts of the input data are compensated.

6. Controlling system (5) comprising the adaptive machine learning system (1) as claimed in one of the preceding claims, at least one output compensation module (6) and at least one actuator (7),
wherein the output compensation module (6) is designed to modify the output data such that actuator specific requirements are fulfilled,
wherein the actuator (7) is designed to be controllable according to the modified output data.

7. An edge device comprising the adaptive machine learning system (1) as claimed in one of the claims 1 to 5.

8. An adaptive machine learning based method (8) comprising the following steps:
- capturing input data with a sensor (2) of an edge device,
- modifying the input data such that edge device specific artifacts of the input data are compensated,
- processing the modified input data and generating output data as a result, wherein processing the modified input data and generating the output data is performed by a trained evaluation module (4).

9. The method (8) as claimed in claim 8 comprising the following further steps:
- modifying the output data according to actuator specific requirements,
- controlling an actuator (7) according to the modified output data.
